# EUROPÄISCHE PATENTSCHRIFT

(11) **EP 2 994 731 B1**
(45) Veröffentlichungstag und Bekanntmachung des Hinweises auf die Patenterteilung: **11.10.2017**
(21) Anmeldenummer: 14723402.5
(22) Anmeldetag: 05.05.2014
(51) Int. Cl.: G01L 5/12, G01L 5/00

(54) **TELEMETRISCHE LASTDOSE MIT FUNKÜBERTRAGUNG DES SIGNALS**
TELEMETRIC LOAD CELL WITH RADIO TRANSMISSION OF THE SIGNAL
BOÎTIER DE CHARGE TÉLÉMÉTRIQUE À TRANSMISSION RADIO DU SIGNAL

(30) Priorität: 08.05.2013 CH 928132013
(43) Veröffentlichungstag der Anmeldung: 16.03.2016
(73) Patentinhaber: Sensormate AG, 8355 Aadorf (CH)
(72) Erfinder: SCHLAEPFER, Bruno, CH-8523 Hagenbuch (CH)
(74) Vertreter: Hepp Wenger Ryffel AG
(86) Internationale Anmeldenummer: PCT/EP2014/059110
(87) Internationale Veröffentlichungsnummer: WO 2014/180784

(56) Entgegenhaltungen:
- EP-A1- 2 103 379
- CH-A2- 702 580

## Beschreibung

Die vorliegende Erfindung bezieht sich auf eine telemetrische Lastdose mit Funkübertragung des Signals gemäss dem einleitenden Teil des unabhängigen Anspruches.

An Kunststoff-Spritzgiessmaschinen wird die Messung der Einspritzkraft immer wichtiger. Gerade bei vollelektrischen Spritzgiessmaschinen mit mechanischem Antrieb ist die Einspritzkraftmessung nicht nur unerlässlich sondern absolut notwendig. Zur Messung dieser Kräfte werden mit Dehnungsmessstreifen beklebte Lastdosen im Kraftfluss hinter der Schnecke angebracht. Da sich die Schnecke nicht nur axial bewegt, sondern auch dreht, kann heute wegen den benötigten Anschlusskabeln - die sich bei Rotation aufwickeln würden - nicht direkt hinter der Schnecke gemessen werden. Dies obwohl das zu Regelzwecken verwendete Einspritzkraftsignal möglichst nahe an der Schnecke den besten Druckverlauf zur Regelung des komplexen Prozesses der Schmelze-Aufbereitung und des gleichzeitigen Einspritzprozesses aufweisen würde, weil Reibungskräfte zwischen der Düse und dem Messort die Einspritzkraftmessung an vollelektrisch angetriebenen Spritzgiessmaschinen in der Regel Membran-Lastdosen verwendet werden, welche 4 oder 8 geklebte Dehnungsmessstreifen aufweisen. Es können aber auch zylindrische Kompressionslastdosen zum Einsatz kommen. Oder es werden indirekt messende Sensoren auf die Struktur aufgebracht, welche die Verformungen und Dehnungen der Struktur verursacht durch die Einspritzkraft messen. Diese Dehnungen sind oft proportional zur Einspritzkraft. Eine solche Lastdose ist in der CH-Pätentanmeldung Nr. 01062/09 (CH 701 412 B1) beschrieben.

Durch die CH 702 580 A2 ist bereits eine telemetrische Lastdose zum elektrischen Messen negativer und positiver Einspritzkräfte an Spritzgiessmaschinen bekannt geworden, welche direkt hinter der drehenden Schnecke angebracht ist. Der integrierte Verstärker und die Dehnungsmessstreifen werden induktiv gespeist und das Kraftsignal wird kabellos übertragen. Allerdings erfolgt die induktive Speisung in axialer Richtung über einen Luftspalt, der im rechten Winkel zur Längsmittelachse der Schnecke verläuft. Eine derartige Speisung setzt jedoch voraus, dass der Antrieb der Schnecke über einen seitlich angeordneten Motor und über ein Zahnradgetriebe erfolgt.

All diesen Lastdosen ist eigen, dass für jeden Maschinentyp eine speziell dimensionierte Lastdose zu entwickeln ist, und dass das Kraftsignal nicht den besten Druckverlauf aufweist, weil sie nicht direkt hinter der Schnecke angebracht sind und somit durch Getriebe und Lagerung unerwünschte, die Messung verfälschende Reibungsverluste auftreten können.

Ausserdem muss im Schadensfall die ganze Lastdose, welche Bestandteil der Produktionsmaschine ist, ausgewechselt werden. Dies dauert in der Regel sehr lange und die Maschine kann in dieser Zeit nicht produzieren.

Durch die EP 2 103 379 A1 ist ein spannfutter-integriertes Kraftmesssystem zur Bestimmung von Schneidkräften an der Werkzeugschneide eines drehbaren Werkzeugs mit zumindest einem Messaufnehmer, bekannt geworden. Der Messaufnehmer ist dabei ein Dehnungssensor, der an einer Werkzeughalterung einer Werkzeugmaschine platzierbar ist. Der Messaufnehmer ist in einer Messnabe integriert, die als ein Adapterstück in das Spannfutter der Werkzeugmaschine einsetzbar ist. Eine stationäre Induktionsspule umgibt die rotierende Messnabe zur induktiven Einkoppelung von elektrischer Energie für einen integrierten Sender zur Übertragung von Messsignalen.

Ziel der Erfindung ist es, diese Nachteile zu vermeiden. Erfindungsgemäss wird dies mit telemetrischen Lastdosen mit Funkübertragung des Signals der eingangs erwähnten Art durch die Merkmale des unabhängigen Anspruches 1 erreicht. Die erfindungsgemässe Ausführung kann mit derselben Lastdose die Einspritzkraft wie auch die Torsionskraft messen. Dies eröffnet neue Möglichkeiten zur Regelung des Einspritzprozesses an Spritzgiessmaschinen. Die erfindungsgemässen telemetrischen Lastdosen mit Funkübertragung des Signals bestehen im Wesentlichen aus dem Lastdosenkörper und dem radial angeordneten Speisemodul und dem Pick-up Ring, wobei der Speisemodul die Primärspule und der Pick-up Ring die Sekundärspule der induktiven Kopplung enthalten. Der Lastdosenkörper ist wegen der damit erreichbaren hohen Linearität vorzugsweise als Kompressiohslastdose ausgeführt, kann aber auch eine drehende Membranlastdose sein oder jede andere Ausführungsform annehmen.

Der Lastdosenkörper dreht mit der Einspritzschnecke, und die auf dem Lastdosenkörper aufgeklebten Dehnungsmessstreifen (DMS) für Kraftmessung und Torsionsmessung sowie die separaten DMS-Verstärker für Kraft- und Torsionsmessung werden durch das Speisemodul mittels induktiver Übertragung gespeist. Die Lastdosen-Kraftsignale und die Torsionssignale werden kabellos über Funk auf die Empfangsmodule übertragen. Damit ist es möglich, direkt an der Schnecke die Einspritzkraft und das Torsionssignal zeitgleich mit einem einfach standardisierbaren Element kontinuierlich zu messen.

Die Lastdose weist erfindungsgemäss einen direkt hinter der Schnecke anbringbaren und zusammen mit dieser drehbaren Lastdosenkörper auf, welcher Dehnungsmessstreifen, wenigstens einen Verstärker und wenigstens ein Funkmodul aufweist. Dabei sind der Verstärker und das Funkmodul über eine dem Lastdosenkörper zugeordnete Sekundärspule und eine relativ zum Lastdosenkörper feststehende Primärspule mittels induktiv gekoppelten Schwingkreisen speisbar. Das Einspritzkraftsignal ist dabei mittels dem Funkmodul auf ein Empfangsmodul übertragbar. Der Lastdosenkörper weist einen die Sekundärspule enthaltenden Pick-up Ring auf und ein radial über dem Pick-up Ring anbringbares Speisemodul enthält die Primärspule. Der Pick-up Ring kann beispielsweise durch Verschrauben oder durch Kleben fixiert werden. Er kann im Querschnitt U-förmig ausgebildet sein und beispielsweise aus zwei Hälften bestehen. Ersichtlicherweise kann mit dieser Anordnung der Lastdosenkörper unmittelbar zwischen die Schnecke und die Antriebswelle eines Motors gekoppelt werden. Seitliche Zahnradgetriebe sind nicht mehr erforderlich, was die Bauweise erheblich vereinfacht.

In bestimmten Fällen wäre es denkbar, dass die Signalübertragung nicht über Funk erfolgt, sondern mittels Amplitudenmodulation über das Speisemodul, wie in der CH 702 580 A2 beschrieben. Voraussetzung ist dabei die Einhaltung der korrekten Spaltbreite. Die übrigen konstruktiven Merkmale bleiben unverändert.

Der Lastdosenkörper weist sowohl erste Dehnungsmessstreifen zum Messen von axialen Kräften, als auch zweite Dehnungsmessstreifen zum Messen von Torsionskräften an der Schnecke auf. Die Funktionalität der telemetrischen Lastdose wird dadurch erheblich gesteigert, sodass sich der Spritzgiessprozess besser steuern lässt. Den ersten und zweiten Dehnungsmessstreifen sind separate Funkmodule zugeordnet, wobei deren Signale gleichzeitig auf separate Empfangsmodule übertragbar sind. Mit dieser Schaltung ist eine lückenlose Überwachung von axialen Druckkräften und Torsionkräften möglich. In bestimmten Fällen könnten die Signale aber auch wechselweise mit nur einem einzigen Funkmodul und nur einem einzigen Empfangsmodul übertragen werden.

Das Speisemodul mit der Primärspule kann eine teilkreisförmige Oberfläche aufweisen, welche mit dem Aussenumfang des Pick-up Rings korrespondiert und welche einen Winkel zwischen 45° und 180° einschliesst. Ersichtlicherweise hat dabei die teilkreisförmige Oberfläche einen Radius, dessen Zentrum idealerweise mit der Längsmittelachse der Schnecke bzw. des Pick-up Rings zusammenfällt. Der Abstand zwischen dem Pick-up Ring und dem Speisemodul bzw. der dazwischen liegende Luftspalt kann vorzugsweise zwischen 0,5 mm und 12 mm variiert werden. Angestrebt wird selbstverständlich ein möglichst geringer Luftspalt, um eine optimale Energieübertragung zu gewährleisten.

Das Speisemodul ist vorzugsweise über ein flexibles Kabel mit einer Induktionselektronik zum Generieren eines hochfrequenten Induktionssignals verbunden. In bestimmten Fällen könnte diese Induktionselektronik aber auch fest dem Speisemodul zugeordnet sein.

Weitere Vorteile können erzielt werden, wenn die Einspritzkraft und die Torsion mit den Funkmodulen mit Antennen und mit Empfangsmodulen gleichzeitig übertragen werden können. Dabei sind jeweils den radialen und:axialen Dehnungsmessstreifen separate Verstärker und Funkmodule zugeordnet. Es wäre alternativ allerdings auch denkbar, dass mit einem Multiplexer von einer Messbrücke zur anderen umgeschaltet wird und dass dann mit einem einzigen Verstärker beide Messbrücken gemessen werden können.

Die telemetrische Lastdose kann eine Kompressionslastdose, eine Membranlastdose oder eine Schublastdose sein. Die Funktionsweise derartiger Lastdosen ist dem Fachmann bekannt und wird daher hier nicht weiter beschrieben.

Weitere Vorteile können erzielt werden, wenn der Lastdosenkörper einen Schaftabschnitt mit einer Bohrung aufweist, in welcher der wenigstens eine Verstärker und das wenigstens eine Funkmodul befestigt sind. Auf dem Aussenmantel des Schaftabschnitts ist der Pick-up Ring befestigt, beispielsweise durch Kleben oder Verschrauben. Durch die Anordnung in einer Bohrung wird erreicht, dass der sich drehende Lastdosenkörper eine möglichst geringe Unwucht aufweist. Die elektrische Verbindung zum Pick-up Ring und zu den aussen angeordneten Dehnungsmessstreifen kann über eine radiale Bohrung erfolgen.

Besonders vorteilhaft schliessen sich bezogen auf die Längsmittelachse auf beiden Seiten des Schaftabschnitts Kupplungsabschnitte an. Diese einstückig mit dem Schaftabschnitt ausgebildeten Kupplungsabschnitte weisen Kupplungsmittel auf zum Ankuppeln der Schnecke auf der einen Seite und zum Ankuppeln von Antriebsteilen auf der anderen Seite. Bei diesen Kupplungsmitteln handelt es sich vorzugsweise um eine Keilwelle und/oder um eine Keilnabe.

Eine Spritzgiessmaschine mit einer vorstehend beschriebenen telemetrischen Lastdose weist eine drehantreibbare Schnecke auf, welche in einer axial bewegbaren Einspritzeinheit gelagert ist. Dabei ist der Lastdosenkörper direkt hinter der Schnecke angeordnet und das Speisemodul ist im Abstand radial über dem Pick-up Ring an der Einspritzeinheit befestigt. Auf diese Weise ist gewährleistet, dass Pick-up Ring und Speisemodul in jeder axialen Relativlage der Schnecke exakt aufeinander ausgerichtet sind.

Das Empfangsmodul kann dabei entweder unmittelbar an der Einspritzeinheit angeordnet sein oder auch an einem ortsfesten Bauteil der Maschine wie beispielsweise am Maschinensteuerungskasten.

Keine bisher bekannten Lastdosen können all diese vorteilhaften Eigenschaften in sich vereinen, vor allem war die gleichzeitige Messung und Übermittlung der Torsions und der Einspritzkraft nicht möglich.

Die Erfindung wird nun anhand von Zeichnungen näher erläutert. Dabei zeigt:
- Figur 1: Eine schematische Ansicht der stark vereinfachten Einspritzeinheit einer Spritzgiessmaschine mit der Erfindungsgemässen telemetrischen Lastdose mit Funkübertragung des Signals
- Figur 2: Einen Querschnitt durch eine Ausführungsform der erfindungsgemässen telemetrischen Lastdose mit Funkübertragung des Signals und dem Speise- und Sendemodul
- Figur 3: Einen Querschnitt durch eine Ausführungsform einer erfindungsgemässen telemetrischen Lastdose mit Funkübertragung des Signals für axiale Einspritzkraftmessung und Torsionsmessung gleichzeitig
- Figur 4: Einen Teilquerschnitt durch ein alternatives Ausführungsbeispiel einer Lastdose,
- Figur 5: Eine Draufsicht auf die Lastdose gemäss Figur 4,
- Figur 6: Ein Schnitt durch die Ebene A-A gemäss Figur 4,
- Figur 7: Eine Perspektivische Darstellung einer erfindungsgemässe Lastdose, und
- Figur 8: Einen Querschnitt durch die Pick-up-Anordnung gemäss Figur 7.

Gleiche Bezugszeichen bedeuten in allen Figuren gleiche Einzelheiten

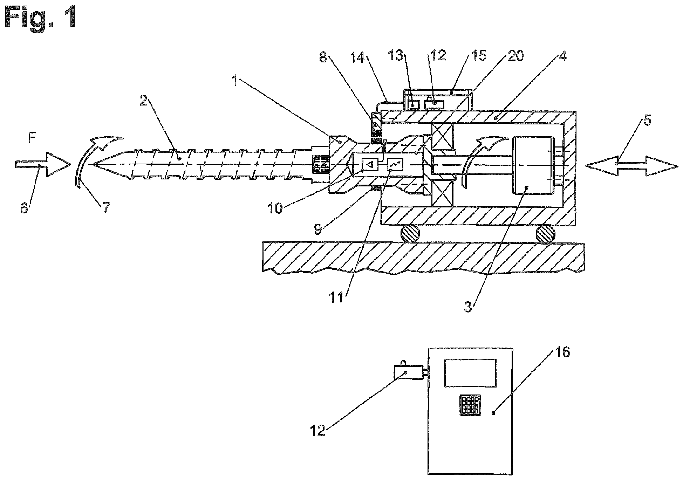

Eine erfindungsgemässe telemetrische Lastdose mit Funkübertragung des Signals 1 nach Fig. 1, Fig. 2 und Fig. 3 ist direkt hinter der drehenden Schnecke 2 angebracht. Die Schnecke wird über den Motor 3 rotatorisch angetrieben. Die gesamte Einspritzeinheit 4 wird mit geeigneten Mitteln entsprechend dem Einspritzvolumen des flüssigen Kunststoffes in Pfeilrichtung 5 axial vor- und rückwärts bewegt. Fig. 1 zeigt, dass die erfindungsgemässe telemetrische Lastdose mit Funkübertragung des Signals 1 gemäss der nur schematischen Darstellung so mit dem Antrieb 3 verbunden ist, dass die Einspritzkraft 6 der Schnecke 2 direkt und ohne Kraftverluste auf die telemetrische Lastdose mit Funkübertragung des Signals 1 abstützt und auch die Torsionskraft 7 auf den Antrieb 3 übertragen werden kann. Der Verstärker 10 und das Funkmodul mit Antenne 11 der drehenden telemetrischen Lastdose mit Funkübertragung des Signals 1 wird mittels Induktion über den Speisemodul 8 und den Pick-up Ring 9 gespeist. Die Induktionselektronik 13 generiert das hochfrequente Induktionssignal, welches über das Kabel 14 auf den Speisemodul 8 geleitet wird. Die Energie zum Betrieb der drehenden telemetrischen Lastdose mit Funkübertragung des Signals 1 wird mittels induktiv gekoppelten Schwingkreisen über den Speisemodul 8 und den Pick-Up Ring 9 übertragen. Dies erlaubt die einfache Speisung der telemetrischen Lastdose mit Funkübertragung des Signals 1 und separater Übertragung der Signale über einen Funkmodul mit Antenne 11 zum Empfangsmodul 12. Der Empfangsmodul 12 kann in einem Gehäuse 15 zusammen mit der Indüktionselektronik 13 oder an einem beliebigen anderen Ort an oder um die Einspritzeinheit 4 angebracht sein. Der Empfangsmodul 12 kann auch direkt am Maschinensteuerungskasten 16 der Spritzgiessmaschine angebracht werden. Solche Funkmodule mit Antenne 11 und Empfangsmodule mit Antenne 12 sind standardmässig erhältlich und können zum Beispiel WLAN-Module (IEEE 802.11) oder WPAN-Module (IEEE 802.15) sein. Der Abstand zwischen dem Pick-Up Ring 9 und Speisemodul 8 kann von 0.5 bis 12 mm variieren. Die Trennung der Energieversorgung und der Signalübertragung vereinfacht den Aufbau des Telemetriesystems und erhöht dessen Betriebssicherheit. Die telemetrische Lastdose mit Funkübertragung des Signals 1 ist vorzugsweise für höchste Linearität als Kompressionslastdose ausgeführt, kann aber auch eine Membranlastdose, eine Schublastdose oder jede andere Bauform sein.

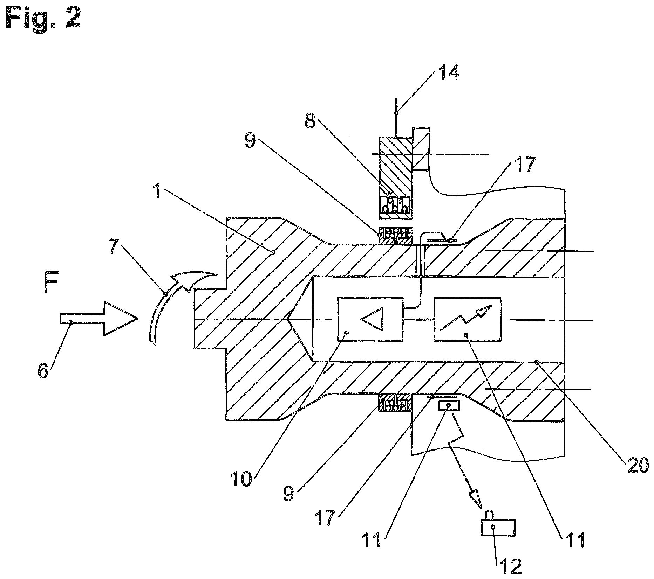

Fig. 2 zeigt einen Querschnitt durch die erfindungsgemässe telemetrische Lastdose mit Funkübertragung des Signals 1 mit den axialen DMS 17 welche innen in der Bohrung 20 oder aussen aufgeklebt sind. Diese axialen DMS 17 werden auf den Verstärker 10 geführt. Der Verstärker 10 und der Funkmodul 11 wird mittels induktiver Kopplung über den Speisemodul 8 und den Pick-up Ring 9 gespeist. Die Eihspritzkraft 6 wird mittels dem Funkmodul mit Antenne 11 an den Empfangsmodul 12 auf die nicht drehende Einspritzeinheit 4 übermittelt. Somit kann direkt hinter der drehenden Schnecke 2 die Einspritzkraft 6 gemessen werden.

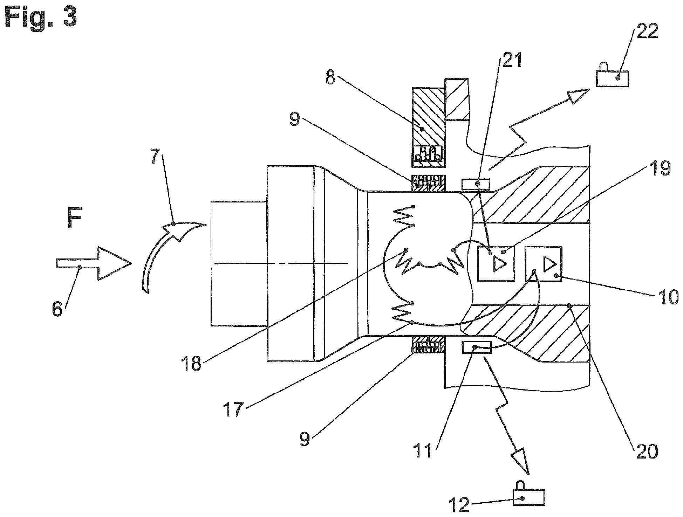

Fig. 3 zeigt einen Querschnitt durch eine erfindungsgemässe telemetrische Lastdose mit Funkübertragung des Signals zur Messung der Einspritzkraft und dem Signal der Torsion 7 gleichzeitig. Zusätzlich zu den axialen DMS 17 welche innen in der Bohrung oder aussen aufgeklebt sind, werden 45 Grad zur axialen Richtung der telemetrischen Lastdose mit Funkübertragung des Signals 1 innen in der Bohrung 20 oder aussen DMS 18 aufgeklebt, welche bei geeigneter Verschaltung im Verstärker 19 die Torsion des Einspritzprozesses messen können. Das Torsionssignal 7 wird mittels dem Funkmodul mit Antenne 21 an den Empfangsmodul 22 auf die nicht drehende und sich nur axial bewegende Einspritzeinheit 4 übermittelt. Der Verstärker 10 und 19 und die Funkmodule 11 und 21 werden mittels induktiver Kopplung über den Speisemodul 8 und den Pick-up Ring 9 gespeist. Die Einspritzkraft 6 und die Torsion 7 werden mittels eines Funkmoduls mit Antenne 11 an den Empfangsmodul 12 auf die nicht drehende Einspritzeinheit übermittelt. Somit kann direkt hinter der drehenden Schnecke 2 die Einspritzkraft 8 und zeitgleich die Torsion 7 gemessen werden.

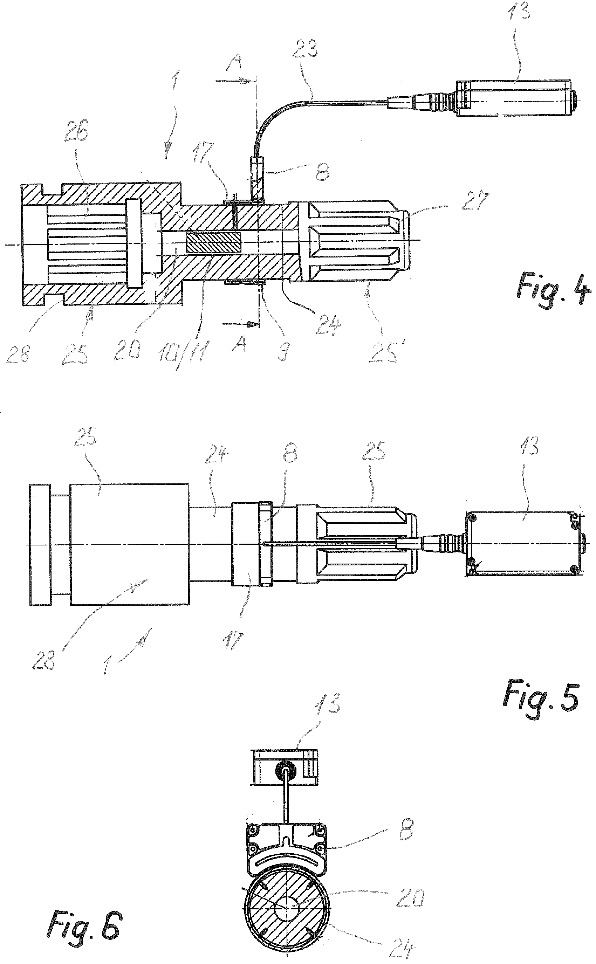

Die Figuren 4 bis 6 zeigen ein alternatives Ausführungsbeispiel einer Lastdose 1 mit einem Lastdosenkörper 28, der im Wesentlichen rotationssymmetrisch ausgebildet ist. Der Lastdosenkörper verfügt über einen mittleren Schaftabschnitt 24 mit einer zentralen Bohrung 20. Am Aussenmantel des Schaftabschnitts ist der Pick-up Ring 9 fixiert und unmittelbar daneben sind beispielsweise die axialen Dehnungsmessstreifen 17 angeordnet. Im Innern der Bohrung 20 sind der Verstärker 10 und das Funkmodul 11 fixiert, wobei die elektrische Verbindung zum Aussenmantel über eine radiale Bohrung mit geringem Durchmesser hergestellt wird.

Auf beiden Seiten des Schaftabschnitts 24 ist einstückig ein Kupplungsabschnitt 25 in der Form einer Keilnabe 26 und ein Kupplungsabschnitt 25' in der Form einer Keilwelle 27 angeordnet.

Unmittelbar über dem Pick-up Ring 9 ist mit hier nicht näher dargestellten Befestigungsmitteln das Speisemodul 8 fixiert, das mit einem flexiblen Kabel 23 mit der Induktionselektronik 13 verbunden ist. Wie insbesondere aus Figur 5 ersichtlich ist, verfügt das Speisemodul 8 über eine teilkreisförmige Oberfläche, welche dem Schaftabschnitt 24 zugewandt und an dessen Radius angepasst ist. Die teilkreisförmige Oberfläche schliesst hier einen Winkel von ca. 45° ein.

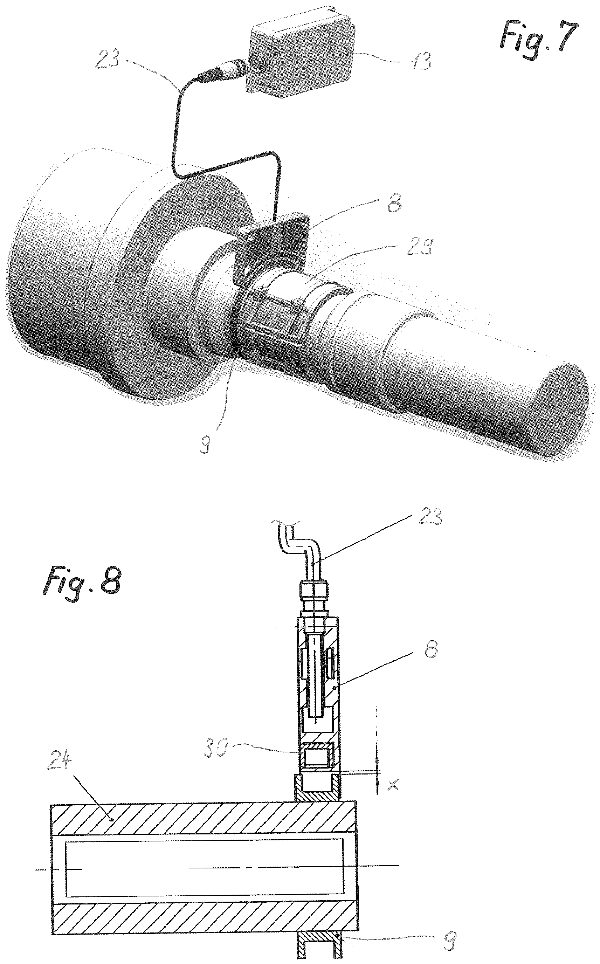

Figur 7 zeigt die Gesamtanordnung nochmals in perspektivischer Darstellung, wobei die Befestigungsmittel zum Befestigen des scheibenförmigen Speisemoduls 8 nicht dargestellt sind. Das Speisemodul wird vorteilhaft mit Hilfe von Schrauben fixiert und zwar derart, dass eine Anpassung des Luftspalts innerhalb eines bestimmten Masses möglich ist. Der Anschluss an die Induktionselektronik 13 erfolgt vorteilhaft über eine Steckverbindung. Unmittelbar neben dem Pick-up Ring 9 umgibt eine zweiteilige Manschette 29 die Welle. Diese schützt die Dehnungsmessstreifen und sie nimmt gleichzeitig die Verstärkerelektronik auf.

Wie in Figur 8 dargestellt, kann der Pick-up Ring 9 im Querschnitt U-förmig ausgebildet sein. Aus fabrikationstechnischen Gründen ist es vorteilhaft, wenn er in zwei Hälften aufgeteilt ist, die sich über je ca. 180° erstrecken. Zwischen dem Speisemodul 8 und dem Pick-up Ring 9 verbleibt ein Luftspalt x mit einer Spaltbreite von beispielsweise 0,5 bis 1,5 mm. Im Speisemodul ist ein ebenfalls U-förmiges Gegenstück 30 fixiert. Der eigentliche Gehäusekörper des Speisemoduls kann aus Kunststoffmaterial bestehen.

## Patentansprüche

1. Telemetrische Lastdose, mit Funkübertragung des Signals zum elektrischen Messen negativer und positiver Einspritzkräfte an Spritzgiessmaschinen mit einer drehantreibbaren Schnecke (2),
- wobei die Lastdose (1) einen direkt hinter der Schnecke anbringbaren und zusammen mit dieser drehbaren Lastdosenkörper (28) aufweist,
- welcher Dehnungsmessstreifen (17, 18), einen Verstärker (10) und ein Funkmodul (11) aufweist,
- und wobei der Verstärker und das Funkmodul über eine dem Lastdosenkörper zugeordnete Sekundärspule und eine relativ zum Lastdosenkörper feststehende Primärspule mittels induktiv gekoppelten Schwingkreisen speisbar sind,
- und das Einspritzkraftsignal (6) mittels dem Funkmodul (11) auf ein Empfangsmodul (12) übertragbar ist,
**dadurch gekennzeichnet,**
- **dass** der Lastdosenkörper (28) einen die Sekundärspule enthaltenden Pick-up Ring (9) aufweist,
- **dass** ein in einem Abstand radial über dem Pick-up Ring anbringbares Speisemodul (8) die Primärspule enthält, und dass der Lastdosenkörper (28) sowohl erste Dehnungsmessstreifen (17) zum Messen von axialen Kräften, als auch zweite Dehnungsmessstreifen (18) zum Messen von Torsionskräften an der Schnecke aufweist, wobei den ersten und zweiten Dehnungsmessstreifen (17, 18) separate Funkmodule (11, 21) zugeordnet sind, wobei deren Signale gleichzeitig auf separate Empfangsmodule (12, 22) übertragbar sind.

2. Telemetrische Lastdose nach Anspruch 1 , **dadurch gekennzeichnet, dass** das Speisemodul (8) mit der Primärspule eine teilkreisförmige Oberfläche aufweist, welche mit dem Aussenumfang des Pick-up Rings (9) korrespondiert und welche einen Winkel zwischen 45° und 180° einschliesst.

3. Telemetrische Lastdose nach einem der Ansprüche 1 oder 2, **dadurch gekennzeichnet, dass** der Abstand zwischen dem Pick-up Ring (9) und dem Speisemodul (8) zwischen 0,5 mm und 12 mm variierbar ist.

4. Telemetrische Lastdose nach einem der Ansprüche 1 bis 3, **dadurch gekennzeichnet, dass** das Speisemodul (8) über ein Kabel (23) mit einer Induktionselektronik (13) zum Generieren eines Induktionssignals verbunden ist.

5. Telemetrische Lastdose nach einem der Ansprüche 1 bis 4, **dadurch gekennzeichnet, dass** die telemetrische Lastdose mit Funkübertragung des Signals eine Kompressionslastdose ist.

6. Telemetrische Lastdose nach einem der Ansprüche 1 bis 4, **dadurch gekennzeichnet, dass** die telemetrische Lastdose mit Funkübertragung des Signals eine Membranlastdose ist.

7. Telemetrische Lastdose nach einem der Ansprüche 1 bis 4, **dadurch gekennzeichnet, dass** die telemetrische Lastdose mit Funkübertragung des Signals eine Schublastdose ist.

8. Telemetrische Lastdose nach einem der Ansprüche 1 bis 7, **dadurch gekennzeichnet, dass** mit einem oder mit mehreren radial angeordneten Schwingkreisen (8, 9) ein oder mehrere Verstärker (10, 19) und Funkmodule (11, 21) auf der drehenden telemetrischen Lastdose (1) mit Funkübertragung des Signals betrieben werden können.

9. Telemetrische Lastdose nach einem der Ansprüche 1 bis 8, **dadurch gekennzeichnet, dass** der Lastdosenkörper (28) einen Schaftabschnitt (24) mit einer Bohrung (20) aufweist, in welcher der Verstärker (10) und das Funkmodul (11) befestigt sind und dass auf dem Aussenmantel des Schaftabschnitts der Pick-up Ring (9) befestigt ist.

10. Telemetrische Lastdose nach Anspruch 9, **dadurch gekennzeichnet, dass** bezogen auf die Längsmittelachse auf beiden Seite des Schaftabschnitts (24) Kupplungsabschnitte (25, 25') mit Kupplungsmitteln (26, 27) zum Ankuppeln der Schnecke auf der einen Seite und zum Ankuppeln von Antriebsteilen auf der anderen Seite angeordnet sind.

11. Telemetrische Lastdose nach einem der Ansprüche 9 oder 10, **dadurch gekennzeichnet, dass** der Pick-up Ring (9) auf dem Aussenmantel des Schaftabschnitts (24) durch Kleben oder Verschrauben befestigt ist.

12. Spritzgiessmaschine mit einer telemetrischen Lastdose nach einem der Ansprüche 1 bis 11 mit einer drehantreibbaren Schnecke (2) welche in einer axial bewegbaren Einspritzeinheit (4) gelagert ist, wobei der Lastdosenkörper (28) direkt hinter der Schnecke angeordnet ist und wobei das Speisemodul (8) im Abstand radial über dem Pick-up Ring (9) an der Einspritzeinheit (4) befestigt ist.

13. Spritzgiessmaschine nach Anspruch 12, **dadurch gekennzeichnet, dass** das Empfangsmodul (12) an der Einspritzeinheit angeordnet ist.

14. Spritzgiessmaschine nach Anspruch 13, **dadurch gekennzeichnet, dass** das Empfangsmodul (12) an einem Maschinensteuerungskasten (16) angeordnet ist.

## Claims

1. Telemetry load cell, with radio transmission of the signal for electrically measuring negative and positive injection forces on injection moulding systems having a rotationally drivable screw (2),
- wherein the load cell (1) has a load cell body (28) that is attachable directly behind the screw and is rotatable together with it,
- which load cell body (28) has strain gauges (17, 18), an amplifier (10) and a radio module (11),
- and wherein the amplifier and the radio module are able to be supplied via a secondary coil assigned to the load cell body and a primary coil that is fixed relative to the load cell body by way of inductively coupled resonant circuits,
- and the injection force signal (6) is able to be transmitted to a receiving module (12) by way of the radio module (11),
**characterized**
- **in that** the load cell body (28) has a pick-up ring (9) containing the secondary coil,
- **in that** a supply module (8) that is able to be attached at a distance radially above the pick-up ring contains the primary coil,
and **in that** the load cell body (28) has both first strain gauges (17) for measuring axial forces and second strain gauges (18) for measuring torsional forces on the screw, wherein the first and second strain gauges (17, 18) are assigned separate radio modules (11, 21), wherein the signals thereof are able to be simultaneously transmitted to separate receiving modules (12, 22).

2. Telemetry load cell according to claim 1, **characterized in that** the supply module (8) having the primary coil has a partially circular surface that corresponds to the outer circumference of the pick-up ring (9) and encloses an angle between 45° and 180°.

3. Telemetry load cell according to either of claims 1 and 2, **characterized in that** the distance between the pick-up ring (9) and the supply module (8) is variable between 0.5 mm and 12 mm.

4. Telemetry load cell according to one of claims 1 to 3, **characterized in that** the supply module (8) is connected to an induction electronics system for generating an induction signal (13) via a cable (23).

5. Telemetry load cell according to one of claims 1 to 4, **characterized in that** the telemetry load cell with radio transmission of the signal is a compression load cell.

6. Telemetry load cell according to one of claims 1 to 4, **characterized in that** the telemetry load cell with radio transmission of the signal is a membrane load cell.

7. Telemetry load cell according to one of claims 1 to 4, **characterized in that** the telemetry load cell with radio transmission of the signal is a shear load cell.

8. Telemetry load cell according to one of claims 1 to 7, **characterized in that** one or more amplifiers (10, 19) and radio modules (11, 21) on the rotating telemetry load cell (1) with radio transmission of the signal can be operated with one or with a plurality of radially arranged resonant circuits (8, 9).

9. Telemetry load cell according to one of claims 1 to 8, **characterized in that** the load cell body (28) has a shaft section (24) having a hole (20), in which the amplifier (10) and the radio module (11) are attached, and **in that** the pick-up ring (9) is attached to the outer sheath of the shaft section.

10. Telemetry load cell according to claim 9, **characterized in that** coupling sections (25, 25') having coupling means (26, 27) are arranged on both sides of the shaft section (24), with respect to the longitudinal central axis, for coupling the screw on one side and for coupling drive parts on the other side.

11. Telemetry load cell according to either of claims 9 and 10, **characterized in that** the pick-up ring (9) is attached to the outer sheath of the shaft section (24) by way of adhesive bonding or a screw connection.

12. Injection moulding system having a telemetry load cell according to one of claims 1 to 11 having a rotationally drivable screw (2), which is mounted in an axially movable injection unit (4), wherein the load cell body (28) is arranged directly behind the screw and wherein the supply module (8) is attached to the injection unit (4) at a distance radially above the pick-up ring (9).

13. Injection moulding system according to claim 12, **characterized in that** the receiving module (12) is arranged on the injection unit.

14. Injection moulding system according to claim 13, **characterized in that** the receiving module (12) is arranged on a machine control box (16).

## Revendications

1. Cellule de charge télémétrique, avec transmission radioélectrique du signal servant à la mesure électrique de forces d'injection négatives et positives sur des machines de moulage par injection équipées d'une vis sans fin (2) pouvant être entraînée en rotation,
- la cellule de charge (1) possédant un corps de cellule de charge (28) qui peut être monté directement derrière la vis sans fin et qui peut tourner conjointement avec celle-ci,
- lequel possède des jauges de contrainte (17, 18), un amplificateur (10) et un module radioélectrique (11),
- et l'amplificateur et le module radioélectrique pouvant être alimentés par le biais d'une bobine secondaire associée au corps de cellule de charge et d'une bobine primaire fixe par rapport au corps de cellule de charge au moyen de circuits oscillants couplés par induction,
- et le signal de force d'injection (6) pouvant être transmis par le biais du module radioélectrique (11) à un module de réception (12),
**caractérisée en ce**
- **que** le corps de cellule de charge (28) possède une bague collectrice (9) qui contient la bobine secondaire,
- **qu'**un module d'alimentation (8) qui peut être amené au-dessus de la bague collectrice à un écart radial donné contient la bobine primaire,
et **que** le corps de cellule de charge (28) possède à la fois des premières jauges de contrainte (17) destinées à mesurer des forces axiales ainsi que des deuxièmes jauges de contrainte (18) destinées à mesurer des forces de torsion sur la vis sans fin, des modules radioélectriques (11, 21) distincts étant associés aux première et deuxième jauges de contrainte (17, 18), leurs signaux pouvant être transmis simultanément sur des modules de réception (12, 22) séparés.

2. Cellule de charge télémétrique selon la revendication 1, **caractérisée en ce que** le module d'alimentation (8) muni de la bobine primaire présente une surface partiellement circulaire, laquelle correspond au pourtour extérieur de la bague collectrice (9) et inclut un angle entre 45° et 180°.

3. Cellule de charge télémétrique selon l'une des revendications 1 ou 2, **caractérisée en ce que** l'écart donné entre la bague collectrice (9) et le module d'alimentation (8) est variable entre 0,5 mm et 12 mm.

4. Cellule de charge télémétrique selon l'une des revendications 1 à 3, **caractérisée en ce que** le module d'alimentation (8) est relié par le biais d'un câble (23) avec une électronique d'induction (13) en vue de générer un signal d'induction.

5. Cellule de charge télémétrique selon l'une des revendications 1 à 4, **caractérisée en ce que** la cellule de charge télémétrique avec transmission radioélectrique du signal est une cellule de charge à compression.

6. Cellule de charge télémétrique selon l'une des revendications 1 à 4, **caractérisée en ce que** la cellule de charge télémétrique avec transmission radioélectrique du signal est une cellule de charge à membrane.

7. Cellule de charge télémétrique selon l'une des revendications 1 à 4, **caractérisée en ce que** la cellule de charge télémétrique avec transmission radioélectrique du signal est une cellule de charge à poussée.

8. Cellule de charge télémétrique selon l'une des revendications 1 à 7, **caractérisée en ce qu'**un ou plusieurs circuits oscillants (8, 9) disposés dans le sens radial peuvent faire fonctionner un ou plusieurs amplificateurs (10, 19) et modules radioélectriques (11, 21) sur la cellule de charge télémétrique (1) en rotation avec transmission radioélectrique du signal.

9. Cellule de charge télémétrique selon l'une des revendications 1 à 8, **caractérisée en ce que** le corps de cellule de charge (28) possède une portion de tige (24) munie d'un orifice (20) dans lequel sont fixés l'amplificateur (10) et le module radioélectrique (11) et **en ce que** la bague collectrice (9) est fixée sur l'enveloppe extérieure de la portion de tige.

10. Cellule de charge télémétrique selon la revendication 9, **caractérisée en ce qu'**en référence à l'axe central longitudinal, des portions d'accouplement (25, 25') comportant des moyens d'accouplement (26, 27), destinés d'un côté à l'accouplement avec la vis sans fin et de l'autre côté à l'accouplement avec des pièces d'entraînement, sont disposées des deux côtés de la portion de tige (24).

11. Cellule de charge télémétrique selon l'une des revendications 9 ou 10, **caractérisée en ce que** la bague collectrice (9) est fixée par collage ou vissage sur l'enveloppe extérieure de la portion de tige (24).

12. Machine de moulage par injection équipée d'une cellule de charge télémétrique selon l'une des revendications 1 à 11, comprenant une vis sans fin (2) pouvant être entraînée en rotation qui est logée dans une unité d'injection (4) mobile dans le sens axial, le corps de cellule de charge (28) étant disposé directement derrière la vis sans fin et le module d'alimentation (8) étant fixé au-dessus de la bague collectrice (9) à un écart radial donné sur l'unité d'injection (4).

13. Machine de moulage par injection selon la revendication 12, **caractérisée en ce que** le module de réception (12) est disposé sur l'unité d'injection.

14. Machine de moulage par injection selon la revendication 13, **caractérisée en ce que** le module de réception (12) est disposé sur un coffret de commande de machine (16).
